Europäisches Patentamt

European Patent Office

Office européen des brevets

(11) Veröffentlichungsnummer: **0 132 496**
**B1**

(12) **EUROPÄISCHE PATENTSCHRIFT**

(45) Veröffentlichungstag der Patentschrift:
24.09.86

(51) Int. Cl.⁴: **B 65 G 57/20**

(21) Anmeldenummer: **84102392.2**

(22) Anmeldetag: **05.03.84**

(54) Positioniervorrichtung für das Palettieren von Stückgütern.

(30) Priorität: 20.05.83 DE 3318492

(43) Veröffentlichungstag der Anmeldung:
13.02.85 Patentblatt 85/7

(45) Bekanntmachung des Hinweises auf die Patenterteilung:
24.09.86 Patentblatt 86/39

(84) Benannte Vertragsstaaten:
AT BE CH DE FR GB IT LI LU NL SE

(56) Entgegenhaltungen:
US-A-3 850 313
US-A-3 884 363
US-A-4 242 025

(73) Patentinhaber: Lingenfelder, Ottmar, Auf dem
Kyberg 27, D-8024 Deisenhofen bei München (DE)

(72) Erfinder: Lingenfelder, Ottmar, Auf dem Kyberg
27, D-8024 Deisenhofen bei München (DE)

(74) Vertreter: Popp, Eugen, Dr., MEISSNER, BOLTE &
PARTNER Widenmayerstrasse 48 Postfach 86 06
24, D-8000 München 86 (DE)

EP 0 132 496 B1

## Beschreibung

Die Erfindung betrifft eine Positioniervorrichtung gemäß dem Oberbegriff des Patentanspruches 1.

Eine derartige Positioniervorrichtung ist aus der US-A- 3 884 363 bekannt. Dort ist eine Positioniereinheit auf Schienen hin- und herverfahrbar, die ihrerseits auf sich quer dazu erstreckenden Schienen hin- und herverfahrbar sind. Das Hin- und Herverfahren der die Positioniereinheit tragenden Schienen quer zu ihrer Längserstreckung erfolgt mittels eines stationären Antriebes, wobei zur Kraftübertragung eine Antriebsspindel dient.

Zur Hin- und Herbewegung der Positioniereinheit auf den diese unmittelbar tragenden Schienen ist dieser ein gesonderter Antrieb zugeordnet; dieser wird dabei mit einer der Führungselemente mitbewegt. Der Anschluß zu der diesem Antrieb zugeordneten Energiequelle (Stromanschluß) erfolgt über elektrische Kabel oder dergleichen Energie-Übertragungsmittel, die den Bewegungen der Positioniereinheit in einer der beiden Bewegungsrichtungen folgen.

Durch den mit der Positioniereinheit mitbewegten Antrieb muß aufgrund der dadurch bedingten höheren Trägheitskräfte die Gesamtkonstruktion relativ stark dimensioniert und damit aufwendig gestaltet werden. Desweiteren ist die Energieversorgung des mit der Positioniereinheit mitbewegten Antriebs problematisch.

Der Erfindung liegt die Aufgabe zugrunde, eine Positioniervorrichtung der bekannten Art dahingehend zu verbessern, daß bewegte Antriebe vermieden werden können.

Diese Aufgabe wird erfindungsgemäß durch die kennzeichnenden Merkmale des Patentanspruches 1 gelöst.

Erfindungsgemäß erfolgt also die Bewegung der Positioniereinheit ausschließlich durch stationäre Antriebe. Die Gesamtkonstruktion kann daher leichter gebaut sein. Desweiteren entfallen bewegte elektrische Kabelverbindungen oder dergleichen zu einem mitbewegten Antrieb.

Bevorzugte konstruktive Details der erfindungsgemäßen Positioniervorrichtung sind in den Unteransprüchen beschrieben.

Es sei darauf hingewiesen, daß die Positionierebene sowohl horizontal als auch geneigt oder aufrecht liegen kann. Auch muß die Positioniereinheit nicht unbedingt so gestaltet sein, daß sie zum Aufnehmen, Transportieren und Absetzen von Gegenständen geeignet ist. Die Positioniereinheit kann auch ein Betätigungsorgan für Druckschalter, thermische oder optische Sensoren sein.

Vorzugsweise ist die Positioniereinheit auch noch um eine sich etwa senkrecht zur Positionierebene erstreckende Achse verschwenkbar, um die Variabilität und Einsatzmöglichkeit zu erhöhen. Auch kann die Positioniereinheit so ausgebildet sein, daß sie senkrecht zur Positionierebene hin- und herbewegbar ist. Dann muß jedoch ein erhöhtes Konstruktionsgewicht der Positioniereinheit in Kauf genommen werden bedingt durch den zusätzlichen Antrieb und die zusätzlichen Führungslager.

Die erfindungsgemäße Positioniervorrichtung eignet sich ganz besonders für einen programmierten Bewegungsablauf, wobei zu diesem Zweck die in den Führungselementen zugeordneten Antriebe mit einem X-Y-Koordinatenspeicher und einem Rechner gekoppelt sind. Zugleich kann durch den Rechner auch noch die Bewegung der zu beladenden Palette und/oder der Positioniereinheit in Z-Richtung vorgegeben werden.

Nachstehend wird eine bevorzugte Ausführungsform der Erfindung anhand der beigefügten Zeichnung näher erläutert. Es zeigen:

Figur 1 eine perspektivische Übersichts-Ansicht eines erfindungsgemäß ausgebildeten Palettierers; und

Figur 2 die Koordinaten-Führung der Positioniereinheit bei einem Palettierer gemäß Figur 1 in schematischer Perspektiv-Ansicht.

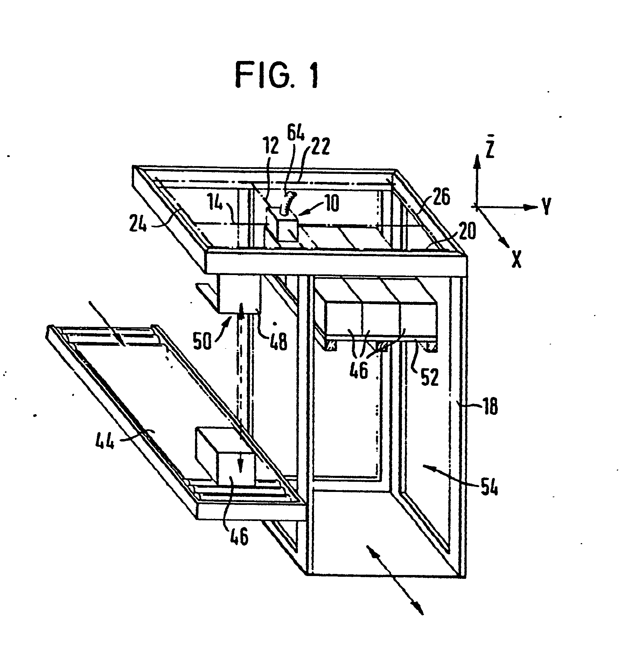

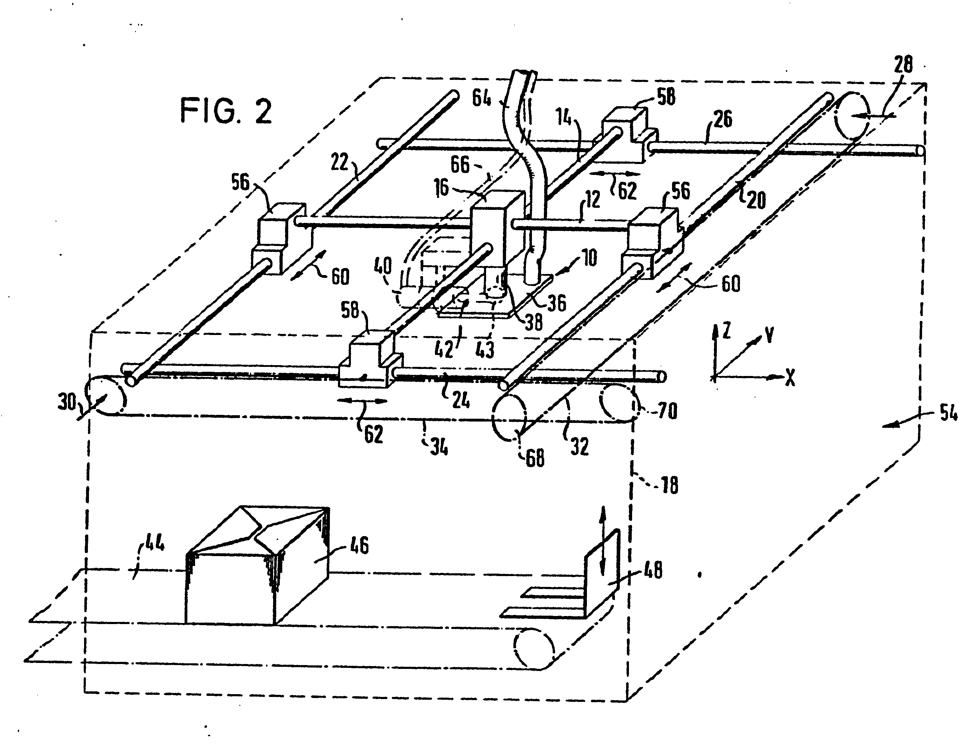

Der Palettierer nach den Figuren 1 und 2 umfaßt einen gemeinsamen Rahmen (18), einen im Bodenbereich des Rahmens (18) angeordneten Rollenförderer (44) zum Antransport von zu positionierenden Kartons (46) (Kartonzulauf), einen innerhalb des Rahmens (18) neben dem Rollenförderer (44) angeordneten Stapelraum (54), in den eine zu beladende Palette (52) oder dergleichen einführbar ist, und eine oberhalb des Rollenförderers (44) und des Stapelraums (54) angeordnete Positioniereinheit (10), die eine Karton- oder dergleichen -aufnahme (36) (Figur 2) aufweist und in horizontaler Ebene (X-Y-Richtung) beliebig verfahrbar ist. Wie Figur 2 erkennen läßt, ist die Positioniereinheit (10) an zwei übereinander angeordneten, sich senkrecht zueinander und parallel zur horizontalen x-y-Positionierebene erstreckenden Führungselementen (12, 14) in Form von Führungsstangen längsverschieblich gelagert. Zu diesem Zweck umfaßt die Positioniereinheit (10) ein gemeinsames Führungslager, das von den beiden Führungsstangen (12, 14) über Kreuz durchsetzt ist. Jeder Führungsstange (12, 14) ist innerhalb des Führungslagers (16) ein Längskugellager zugeordnet, die eine hohe "Leichtgängigkeit" gewährleisten. Die beiden in Form von Führungsstangen ausgebildeten Führungselemente (12, 14) sind in Richtung ihrer Längserstreckung hin- und herverfahrbar. Zu diesem Zweck weisen die Führungsstangen (12, 14) in ihren freien Enden Schlitten (56 bzw. 58) auf, die längs sich parallel zu der jeweils anderen Führungsstange erstreckenden Spurstangen (20, 22 bzw. 24, 26) längsverschieblich gelagert sind (siehe Doppelpfeile 60 bzw. 62). Den beiden Führungselementen bzw. -stangen (12, 14) sind jeweils ein Antrieb (26 bzw. 30) vorzugsweise elektromotorischer Antrieb, zugeordnet. Diese beiden Antriebe sind in Figur 2 nur in Form von Krafteinleitungs-Pfeilen schematisch dargestellt. Die Kraftübertragung von den im Rahmen 16 ortsfest angeordneten Antrieben (26, 30) auf die beiden Führungselemente bzw. -stangen (12, 14) erfolgt über Antriebsketten (32 bzw. 34), die an einem der beiden Führungsschlitten (56 bzw. 58) eines jeden Führungselementes (12 bzw. 14) angreifen. Zu diesem Zweck sind die Antriebsketten (32, 34) mit den jeweils zugeordneten Führungsschlitten (56, 58) fest verbunden. Bei einer führungswirksamen Länge der Führungselemente bzw. -stangen (12, 14) von etwa bis zu 2 Metern ist eine einseitige Krafteinleitung mittels der Antriebsketten (32, 34) ausreichend. Erst bei größeren Abmessungen ist eine symetrische Krafteinleitung vorteilhaft, um ein Verklemmen der Führungsschlitten (56, 58) bzw. der Führungselemente (12, 14) innerhalb des gemeinsamen Kreuz-Führungs-Lagers (16) mit Sicherheit zu vermeiden.

Die Karton- oder dergleichen -aufnahme (36) der Positioniereinheit (10) ist bei der in Figur 2 dargestellten Ausführungsform plattenförmig ausgebildet. Sie weist an ihrer Unterseite Vorzugsweise 4 Saugnäpfe auf, die über einen gemeinsamen Schlauch (64) an eine nicht dargestellte Unterdruckwelle anschließbar sind. Mittels der genannten Saugnäpfe, die in Figur 2 ebenfalls nicht dargestellt sind, kann ein zu positionierender Karton (46) angehoben, transportiert und an geeigneter Stelle wieder abgesetzt werden. Zum Zwecke des Absetzens eines Kartons werden die Saugnäpfe über den Schlauch (64) mit Atmosphärendruck beaufschlagt.

Die plattenförmige Karton- oder dergleichen -aufnahme (36) ist bei der Ausführungsform nach Figur 2 um eine aufrechte Achse (38) um mindestens 90 Grad verschwenkbar. Der Schwenkantrieb (40) umfaßt eine pneumatisch gesteuerte Kolben-Zylinder-Einheit, die an dem gemeinsamen Führungslager (16) lösbar befestigt ist und deren Kolbenstange (42) über ein Kugelgelenk (43) mit der plattenförmigen Karton- oder dergleichen -aufnahme (36) verbunden ist. Die Verbindung zwischen dem pneumatisch gesteuerten Schwenkantrieb (40) und einer nicht dargestellten Luftversorgungs- und Steuer-Einrichtung erfolgt über einen Pneumatikschlauch (66). Statt einer pneumatisch gesteuerten Kolben-Zylinder-Einheit kann als Schwenkantrieb (40) auch ein elektromagnetischer Antrieb verwendet werden. Letzterer hat den Vorteil, daß der Pneumatikschlauch (66) durch wesentlich gewichtsärmere und flexiblere elektrische Leitungen ersetzt werden könnte. Diese könnten sogar innerhalb des mit einer Unterdruckquelle verbundenen Schlauches (64) verlegt sein.

Die obige Beschreibung sowie Figur 2 lassen sehr gut erkennen, daß bei der erfindungsgemäßen Konstruktion nur ein einziges flexibles Verbindungselement zwischen der Positioniereinheit (10) und der ortsfesten Umgebung erforderlich ist, nämlich der Unterdruckschlauch (64). Dieser kann ohne großen Aufwand so gestaltet werden, daß er eine schnelle Bewegung der Positioniereinheit (10) innerhalb der horizontalen Positionierebene gestattet. Dieser Vorteil wird durch die Verbindung zwischen dem Schwenkantrieb (40) und einer Energiequelle praktisch nicht beeinträchtigt, sofern ein Schwenkantrieb (40) vorgesehen sein soll.

Zur Minimierung des Gewichtes bzw. der Trägheitsmasse der Positioniereinheit (10) ist darauf verzichtet, die Karton- oder dergleichen -aufnahme (36) in vertikaler Richtung bewegbar auszubilden. Es ist daher am Ende des Rollenförderers (44) eine Hubeinrichtung bzw. ein Elevator (48) angeordnet, mittels dem die antransportierten Gegenstände, nämlich Kartons (46), nacheinander in eine angehobene Abhol-Stellung (50) (siehe Figur 1) bringbar sind, in der die Aufnahme der zu positionierenden Gegenstände durch die Positioniereinheit (10) erfolgt.

Beim Beladen der Palette (52) (siehe Figur 1) muß natürlich diese entsprechend der zunehmenden Beladung nach und nach von oben nach unten abgesenkt werden. Dies kann manuell durch entsprechende Bedienung eines die Palette (52) tragenden Gabelstaplers oder einer besonders zugeordneten Hubeinrichtung erfolgen. Letztgenannte Konstruktion eignet sich besonders zur vorprogrammierten Hub- bzw. Senkbewegung der Palette (52).

Der Rahmen (18) ist vorzugsweise eine Schweißkonstruktion bestehend aus Profilstäben, vorzugsweise T- oder U-Profilen. Die Konstruktion zeichnet sich dann durch ein entsprechend geringes Gesamtgewicht aus. Die Höhe des Stapelraums (54) ist durch die maximale Ladehöhe einer Palette (52) sowie einen notwendigen Freiraum zum problemlosen Herausfahren der beladenen Palette bestimmt. Sie beträgt vorzugsweise etwa 2 Meter. Der Rollenförderer (44) ist etwas oberhalb des Bodens bzw. der Unterkante des Rahmens (18) angeordnet und mit diesem fest verbunden. Statt des Rollenförderers (44) kann auch eine Rutsche oder ein Bandförderer vorgesehen sein. Die oben erwähnten Spurstangen (20, 22) bzw. (24, 26) sind mit ihren Enden natürlich auch fest am Rahmen (18) verbunden vorzugsweise lösbar, um bei möglichen Beschädigungen oder Abnutzungen einen Austausch zu ermöglichen. Die Antriebsketten (32, 34) sind jeweils Endlos-Ketten und zum einen um ein mit dem Antrieb (28 bzw. 30) verbundenes Antriebsritzel und andererseits um ein Umlenkrad (68 bzw. 70) herumgeführt.

## Patentansprüche

1. Positioniervorrichtung, insbesondere Palettierer, mit mit einer Positioniereinheit (10), die längs zweier übereinander angeordneten, sich senkrecht zueinander und parallel zur Palettenebene erstreckender Führungselemente (12, 14) verfahrbar ist, wobei dem einen (12 bzw. 14) der beiden Führungselemente ein stationärer Antrieb (28 bzw. 30) zugeordnet ist, durch den dieses Führungselement (12 bzw. 14) quer zu seiner Längserstreckung verfahrbar ist, dadurch gekennzeichnet, daß das andere Führungselement (14 bzw. 12) die Positioniereinheit (10) durchsetzt und mittels eines stationären Antriebs (30 bzw. 28) ebenfalls quer zu seiner Längserstreckung hin- und herverfahrbar ist.

2. Vorrichtung nach Anspruch 1, dadurch gekennzeichnet, daß die Führungselemente (12, 14) jeweils Führungsstangen sind, die längs in einem Rahmen (18) sich jeweils parallel dazu erstreckender Schienen oder Spur-Stangen (20, 22; 24, 26) hin- und herverfahrbar sind, wobei die Übertragung der Antriebskraft von den Antrieben (28, 30) auf die zugeordneten Führungsstangen (12, 14) durch Ketten (32, 34), Seile, Riemen oder Zahnstangen erfolgt.

3. Vorrichtung nach Anspruch 1 oder 2, dadurch gekennzeichnet, daß die Positioniereinheit (10) eine an eine Unterdruckquelle anschließbare Saugnäpfe, oder dergleichen umfassende Aufnahme (36) für die zu palettierenden Gegenstände aufweist, die um eine sich etwa senkrecht zur Positionierebene bzw. aufrecht erstreckende Achse (38) um mindestens 90° verschwenkbar ist.

4. Vorrichtung nach Anspruch 3, dadurch gekennzeichnet, daß die Aufnahme (36) für die zu palettierenden Gegenstände eine Platte ist, an deren den zu erfassenden und zu positionierenden Gegenständen zugewandten (Unter-) Seite mindestens ein Saugnapf oder dergleichen vorgesehen ist und an die ein Schwenkantrieb (40), vorzugsweise die Kolbenstange (42) einer pneumatisch gesteuerten Kolben-Zylinder-Einheit, angreift.

5. Vorrichtung nach einem der Ansprüche 1 bis 4, dadurch gekennzeichnet, daß die Positioniereinheit (10) samt Führungsstangen (12, 14) oberhalb eines Stapelraumes (54) sowie eines Förderers, vorzugsweise Rollenförderers (44), angeordnet ist, von dem kontinuierlich oder diskontinuierlich antransportierte Gegenstände, wie Kartons (46) oder dergleichen, mittels einer Hubeinrichtung (Elevator 48) in eine angehobene Abhol-Stellung (50) bringbar sind, in der die Ausnahme der zu positionierenden bzw. palettierenden Gegenstände durch die Positioniereinheit (10) erfolgt.

6. Vorrichtung nach einem der Ansprüche 1 bis 5, dadurch gekennzeichnet, daß die den beiden Führungselementen (12, 14) zugeordneten Antriebe (28, 30) mit einem X-Y-Koordinatenspeicher sowie einem Rechner gekoppelt sind, so daß ein vorprogrammiertes Verfahren der Positioniereinheit (10) in der Positionierebene möglich ist.

7. Vorrichtung nach Anspruch 6, dadurch gekennzeichnet, daß durch den Rechner auch noch die Hub- bzw. Absenkbewegung (Z-Koordinate) der zu beladenden Palette (52) gesteuert ist.

## Claims

1. Positioning device, especially a palletizer, with a positioning unit (10) which is movable along two guide elements (12, 14) arranged above one another and extending perpendicularly to one another and parallel to the pallet plane, there being assigned to one (12 or 14) of the two guide elements a stationary drive (28 or 30), by means of which this guide element (12 or 14) is movable transversely relative to its longitudinal extension, characterized in that the other guide element (14 or 12) passes through the positioning unit (10) and is likewise movable to and fro transversely relative to its longitudinal extension by means of a stationary drive (30 or 28).

2. Device according to Claim 1, characterized in that the guide elements (12, 14) are each guide rods which are movable to and fro along rails or track rods (20, 22; 24, 26) extending in a frame (18) respectively parallel to the latter, the driving force being transmitted from the drives (28, 30) to the associated guide rods (12,14) by means of chains (32, 34), ropes, belts or racks.

3. Device according to Claim 1 or 2, characterized in that the positioning unit (10) has a receptacle (36) which incorporates suction cups or the like connectable to a suction source and which is intended for the articles to be palletized and is pivotable through at least 90° about an axle (38) extending approximately perpendicularly to the positioning plane or vertically.

4. Device according to Claim 3, characterized in that the receptacle (36) for the articles to be palletized is a plate on the (bottom) face of which turned towards the articles to be grasped and positioned, there is at least one suction cup or the like and on which engages a pivoting drive (40), preferably the piston rod (42) of a pneumatically controlled piston/cylinder unit.

5. Device according to one of Claims 1 to 4, characterized in that the positioning unit (10), together with the guide rods (12, 14), is arranged above a stacking space (54) and a conveyor, preferably a roller conveyor (44), from which continuously or intermittently delivered articles, such as cardboard boxes (46) or the like, can be brought by means of a lifting appliance (elevator 48) in a raised collecting position (50), in which the articles to be positioned or palletized are extracted by the positioning unit (10).

6. Device according to one of Claims 1 to 5, characterized in that the drives (28, 30) assigned to the two guide elements (12, 14) are coupled to an X-Y coordinate memory and a computer, so that it is possible to execute a preprogrammed movement of the positioning unit (10) in the positioning plane.

7. Device according to Claim 6, characterized in that the lifting or lowering movement (Z coordinate) of the pallet (52) to be loaded is also controlled by the computer.

## Revendications

1. Dispositif de mise en position, notamment dispositif de palettisation, comprenant une unité de mise en position (10), qui peut être déplacée le long de deux éléments de guidage (12, 14) disposés l'un au-dessus de l'autre et s'étendant perpendiculairement entre eux et parallèlement au plan des palettes, un dispositif d'entraînement (28 ou 30) fixe, par lequel un élément de guidage (12 ou 14) peut être déplacé transversalement à son étendue longitudinale, étant associé à l'un (12 ou 14) des deux éléments de guidage, caractérisé en ce que l'autre élément de guidage (14 ou 12) traverse l'unité de mise en position (10) et peut aller et venir également, transversalement à son étendue longitudinale, au moyen d'un dispositif d'entraînement (30 ou 28) fixe.

2. Dispositif suivant la revendication 1, caractérisé en ce que les éléments de guidage (12, 14) sont respectivement des barres de guidage qui peuvent aller et venir le long de rails ou de barres (20, 22; 24, 26) s'étendant dans un bâti (18) et qui leur sont respectivement parallèles, la transmission de la force d'entraînement par les dispositifs d'entraînement (28, 30) aux barres de guidage (12, 14) associées s'effectuant par des chaînes (32, 34), des câbles, des courroies ou des crémaillères.

3. Dispositif suivant la revendication 1 ou 2, caractérisé en ce que l'unité de mise en position (10) comporte des ventouses pouvant être raccordées à une source de dépression, ou un dispositif de réception (36) qui entoure les ventouses qui est destiné aux objets à palettiser et qui peut basculer d'au moins 90° par rapport à un axe (38) s'étendant à peu près perpendiculairement au plan de mise en position ou verticalement.

4. Dispositif suivant la revendication 3, caractérisé en ce que le dispositif de réception (36) des objets à palettiser est une plaque, sur le côté (inférieur), tourné vers les objets à appréhender et à mettre en position de laquelle est prévue au moins une ventouse ou un élément similaire, et qu'attaque un dispositif de commande de basculement (40), de préférence la tige de piston (42) d'une unité à piston et cylindre commandée pneumatiquement.

5. Dispositif suivant l'une des revendications 1 à 4, caractérisé en ce que l'unité de mise en position (10), y compris les barres de guidage (12, 14) est disposée au-dessus d'une chambre d'empilage (54) ainsi que d'un transporteur, de préférence un transporteur à rouleaux (44), par lequel des objets transportés en continu ou en discontinu, comme des cartons (46) ou des objets similaires, peuvent être mis au moyen d'un dispositif de levage, (élévateur 48) en une position d'enlèvement (50) surélevée dans laquelle s'effectue la réception des objets à mettre en position et à palettiser par l'unité de mise en position (10).

6. Dispositif suivant l'une des revendications 1 à 5, caractérisé en ce que le dispositif d'entraînement (28, 30), associé aux deux éléments de guidage (12, 14), est accouplé à une mémoire des coordonnées X-Y, ainsi qu'à un ordinateur de manière à ce qu'un déplacement programmé à l'avance de l'unité de mise en position (10) soit possible dans le plan de mise en position.

7. Dispositif suivant la revendication 6, caractérisé en ce que le mouvement d'ascension et de descente (coordonnées Z) des palettes (52) à charger est également commandé par l'ordinateur.

# FIG. 1

FIG. 2

0 132 496